(19) Europäisches Patentamt

European Patent Office

Office européen des brevets

(11) **EP 4 718 684 A1**

(12) **EUROPEAN PATENT APPLICATION**

(43) Date of publication:
**01.04.2026 Bulletin 2026/14**

(21) Application number: **25186081.3**

(22) Date of filing: **27.06.2025**

(51) International Patent Classification (IPC):
*H02K 1/24* *(2006.01)*     *H02K 19/10* *(2006.01)*
*H02K 1/16* *(2006.01)*

(52) Cooperative Patent Classification (CPC):
**H02K 1/246; H02K 19/103;** H02K 1/165;
H02K 2213/03

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **26.09.2024 TW 113136764**

(71) Applicant: **National Ilan University
Yilan City 260 (TW)**

(72) Inventors:
• **Chen, Cheng-Hu
260 Yilan City (TW)**
• **Yao, Yu-Cheng
260 Yilan City (TW)**
• **Xu, Jun-Wei
260 Yilan City (TW)**
• **LIN, Ruey-Yue
260 Yilan City (TW)**

(74) Representative: **Stevens Hewlett & Perkins
First Floor
St Bartholomew's House
Lewins Mead
Bristol BS1 2NH (GB)**

(54) **SYNCHRONOUS RELUCTANCE MOTOR AND DESIGN METHOD THEREOF**

(57) The present invention provides a synchronous reluctance motor, comprising: a stator including a plurality of stator slots, a plurality of stator teeth, a stator edge, and a stator yoke width (Wy); and a rotor including a plurality of motor poles, each motor pole includes a plurality of rotor barriers and the first to n-th magnetic channels. The first magnetic channel includes the first magnetic channel width ($W_1$), the n-th magnetic channel includes the n-th magnetic channel width ($W_n$), n is a positive integer greater than 1, wherein, each motor poles includes a sum of the widths of the plurality of magnetic channels ($\Sigma W$). The formula for $\Sigma W$ is

$$\sum W = \frac{W_1}{2} + W_2 + \cdots + W_{n-1} + W_n$$, wherein, the relationship between $\Sigma W$ and the width of the stator yoke ($W_y$) is: $0.7 \leq \frac{\sum W}{W_y} \leq 1.3$. Furthermore, the present invention also provides a design method of a synchronous reluctance motor.

FIG. 4

EP 4 718 684 A1

**Description**

CROSS-REFERENCE TO RELATED APPLICATION

This application claims the priority of Taiwanese patent application No. 113136764, filed on September 26, 2024, which is incorporated herewith by reference.

BACKGROUND OF THE INVENTION

1. Field of the Invention

The present invention relates generally to a structure of a synchronous reluctance motor and a design method thereof, and more particularly, to a structure that can effectively use the stator and rotor cores of a motor so that the synchronous reluctance motor has output performance of high conversion efficiency, high output torque, and low torque ripple, and a design method thereof.

2. The Prior Arts

Currently, up to 90% of integral horsepower industrial motors are still induction motors. Wherein, most motors are produced with an output power of less than 30 horsepower (HP), and most motor manufacturers are small and medium-sized enterprises. Since induction motors below 30HP include two-pole/four-pole/six-pole designs, there are many models resulting in high investment cost of tools and dies. This approach has resulted in motor manufacturers being less willing to develop and produce high-efficiency motors, which is not conducive to the promotion of high-efficiency motors. In the current motor market, except for a few large motor manufacturers, many small and medium-sized motor manufacturers are still unable to provide complete high-efficiency motor products. As a result, there are still many industrial motors on the market whose efficiency cannot meet international regulations, which makes it impossible to effectively use precious energy and raw materials. This has become a very difficult energy problem for governments around the world.

SUMMARY OF THE INVENTION

Problems to be solved by the invention:
The present invention adopts a motor structure with a four-pole rotor and a motor stator that can be shared with an induction motor to design a synchronous reluctance motor suitable for use in conjunction with an inverter, so as to replace the vast number of models and the corresponding huge investment cost pressure that motor manufacturers need to face when developing two-pole/four-pole/six-pole high-efficiency induction motors. On one hand, the present invention can reduce the investment cost of developing a complete series of high-efficiency motors, and can help promote the market of high-efficiency motors on the other hand. The present invention also has the following advantages: 1. Effectively reducing the use of raw materials, including not requiring the rotor aluminum die-casting or copper die-casting process, effectively reducing the use of silicon steel sheets and copper wires in a design without secondary rotor losses, reducing impact to the environment, and effectively simplifying the process of separating and reusing raw materials in the motor recycling process. 2. Improve motor output efficiency, reduce impact to the environment, and achieve more efficient use of energy. 3. Reduce torque ripple, so that the application of synchronous reluctance motor can be used in high-level servo motion control field in addition to speed regulation applications. 4. Under given stator conditions, provide a systematic design process, simplify the design procedure, shorten the design time, reduce development costs, and achieve high-performance synchronous reluctance motors with high efficiency, high power density, and low torque ripple.

Technical means to solve the problem:
A synchronous reluctance motor, comprising: a stator, comprising a plurality of stator slots, a plurality of stator teeth, and a stator edge, each of the stator slots comprising a stator slot bottom end, a stator yoke width ($W_y$) being included between a stator slot bottom end center edge tangent line and a stator edge tangent line; and a rotor, comprising a plurality of motor poles, each of the motor poles comprising a plurality of rotor barriers and a plurality of magnetic channels, the magnetic channels comprising a first magnetic channel to an n-th magnetic channel, and the rotor barriers and the magnetic channels being arranged in an alternating manner; wherein, the first magnetic channel includes a first magnetic chan-nel width ($W_1$), the n-th magnetic channel includes an n-th magnetic channel width ($W_n$), n is a positive integer greater than 1; wherein each of the motor poles includes a sum of the widths of the plurality of magnetic channels 205 ($\Sigma W$), and the sum of the widths of the plurality of magnetic channels 205 ($\Sigma W$) is

$$\sum W = \frac{W_1}{2} + W_2 + \cdots + W_{n-1} + W_n \text{ , wherein}$$

the relationship between the sum of the widths of the plurality of magnetic channels ($\Sigma W$) and the stator yoke width (Wy) is: $0.7 \leq \frac{\sum W}{W_y} \leq 1.3$ .

Preferably, each of the stator teeth includes a stator tooth width (Wt), and the relationship between the first magnetic channel width ($W_1$) and the stator tooth width ($W_t$) is: $0.85 \leq \frac{W_1}{W_t} \leq 1.15$ .

Preferably, the relationship between the first magnetic channel width ($W_1$) to the n-th magnetic chan-nel width ($W_n$) is: $W_1 \geq W_2 \geq \cdots \geq W_{n-1} \geq W_n$.

Preferably, the relationship between the first magnetic channel width ($W_1$) and the n-th magnetic channel width ($W_n$) is: $(W_1 - W_n) \leq 0.2\left(\frac{\sum W}{n-0.5}\right)$ .

Preferably, the number of the stator slots is one of 24 slots, 36 slots, and 48 slots.

On the other hand, the present invention also provides a design method for a synchronous reluctance motor, comprising the following steps: setting the geometric dimensions of a stator, the number of a plurality of stator slots, a stator teeth width ($W_t$) and a stator yoke width ($W_y$), wherein the stator comprises a stator edge, each of the stator slots comprises a stator slot bottom end, and a stator yoke width ($W_y$) being included between a stator slot bottom end center edge tangent line and a stator edge tangent line; and setting the sum of the widths of the plurality of magnetic channels ($\Sigma W$) in a motor pole of a rotor, wherein the relationship between the sum of the widths of the plurality of magnetic channels ($\Sigma W$) and the width of the stator yoke ($W_y$) is:

$$0.7 \leq \frac{\sum W}{W_y} \leq 1.3 \ .$$

Furthermore, the design method of the present invention further includes the following step: setting the number of a plurality of rotor barriers and a plurality of magnetic channels in the number of motor poles of the rotor, wherein the magnetic channels include a first magnetic channel to an n-th magnetic channel, the first magnetic channel includes a first magnetic channel width ($W_1$), the n-th rotor magnetic channel includes an n-th magnetic channel width ($W_n$), n is a positive integer greater than 1, and the sum of widths of the plurality of magnetic channels

$$\left( \sum W \right) = \frac{W_1}{2} + W_2 + \cdots + W_{n-1} + W_n \ .$$

Furthermore, the design method of the present invention further comprises the following step: setting the first magnetic channel width ($W_1$), wherein the relationship between the first magnetic channel width ($W_1$) and

the stator tooth width ($W_t$) is: $0.85 \leq \frac{W_1}{W_t} \leq 1.15$ .

Furthermore, the design method of the present invention further includes the following step: setting the relationship between the first magnetic channel width ($W_1$) to the n-th magnetic channel width ($W_n$) to be: $W_1 \geq W_2 \geq \cdots \geq W_{n-1} \geq W_n$.

Furthermore, the design method of the present invention further includes the following step: setting the relationship between the first magnetic channel width ($W_1$) and the n-th magnetic channel width ($W_n$) to:

$$(W_1 - W_n) \leq 0.2 \left( \frac{\sum W}{n - 0.5} \right) \ .$$

Effects of the invention:
As aforementioned, the present invention provides a synchronous reluctance motor and a design method thereof. The synchronous reluctance motor of the present invention has very high applicability, and the reluctance motor structure suitable for different applications can be designed by only adjusting the structural relationship parameters of the rotor and the stator. Wherein, the design of a specific pole configuration (such as four poles) combined with the use of an inverter can effectively reduce the development time and investment cost of high-efficiency motors. The output characteristics of high efficiency and high power density can effectively reduce the use of raw materials and use electrical energy more efficiently. The output characteristics of high output torque and low torque ripple can be used in high value-added applications (such as machine tools, automation equipment and electric vehicles, etc.), thereby improving the product value of motor manufacturers. Furthermore, the present invention provides a systematic design process and proposes a design method for a synchronous reluctance motor with high efficiency, high power density and low torque ripple.

BRIEF DESCRIPTION OF THE DRAWINGS

The present invention will be apparent to those skilled in the art by reading the following detailed description of a preferred embodiment thereof, with reference to the attached drawings, in which:

FIG. 1 is a schematic view of the structure of a synchronous reluctance motor in the prior art.
FIG. 2 is a schematic structural view of a rotor in a synchronous reluctance motor according to an embodiment of the present invention.
FIG. 3 is a diagram showing a relationship curve between the value of the sum of the widths of the plurality of magnetic channels ($\Sigma W$)/the width of the stator yoke ($W_y$) and the torque according to an embodiment of the present invention.
FIG. 4 is a schematic structural view of a synchronous reluctance motor according to another embodiment of the present invention.
FIG. 5 is a schematic structural view of a synchronous reluctance motor according to yet another embodiment of the present invention.
FIG. 6 is a schematic structural view of a synchronous reluctance motor according to yet another embodiment of the present invention.
FIG. 7 is a flowchart of a design method for a synchronous reluctance motor according to an embodiment of the present invention.
FIG. 8 is a flowchart of a design method for a synchronous reluctance motor according to yet another embodiment of the present invention.

DETAILED DESCRIPTION OF THE PREFERRED EMBODIMENT

The accompanying drawings are included to provide a further understanding of the invention, and are incorporated in and constitute a part of this specification. The drawings illustrate embodiments of the invention and, together with the description, serve to explain the principles of the invention.

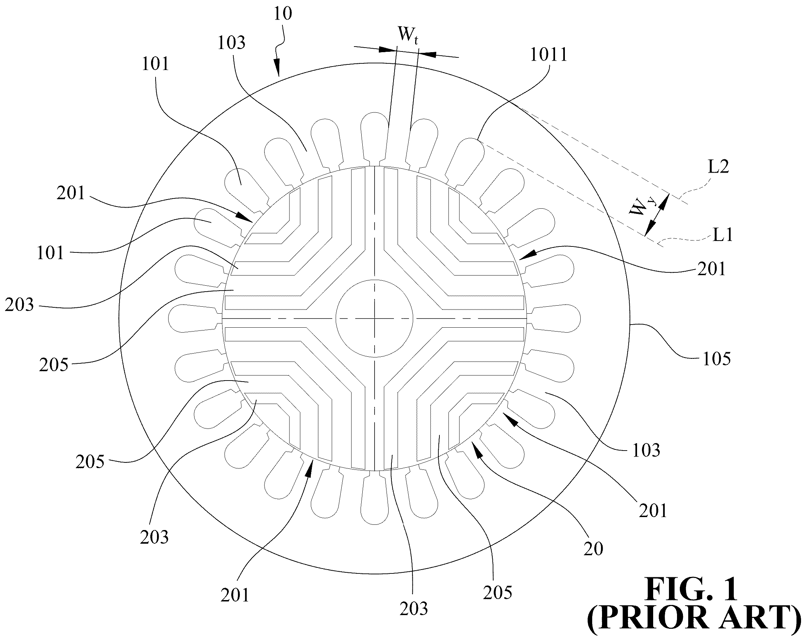

FIG. 1 is a schematic view for illustrating the structure of a synchronous reluctance motor in the prior art. Referring to FIG. 1, a synchronous reluctance motor generally includes a stator 10 and a rotor 20. The stator 10 includes a plurality of stator slots 101, a plurality of stator teeth 103, and a stator edge 105. The stator edge 105 is the circumference of the stator 10 or can be called the stator outer circumference. Each of the stator slots 101 includes a stator slot bottom end 1011. A stator yoke width ($W_y$) is included between a stator slot bottom end center edge tangent L1 of the stator slot bottom end 1011 and a stator edge tangent L2 of the stator edge 105. The stator yoke width ($W_y$) is defined as the shortest distance from the bottom edge of the stator slot 101 to the stator edge 105. Each stator tooth 103 includes a stator tooth width (Wt). Therefore, the structure of the stator 10 includes a stator yoke width ($W_y$) and a stator tooth width (Wt).

The stator slots 101 are evenly arranged around and spaced apart on the stator 10. The stator teeth 103 are also evenly arranged around and spaced apart on the stator 10. The stator slots 101 and the stator teeth 103 are staggered with each other in the stator 10. The stator slots 101 are used to place electrical conductors (not shown in the figures) to facilitate the transfer of electrical energy and generate a magnetic field on the stator 10, and the stator teeth 103 are used to transfer the magnetic field to the rotor 20.

The rotor 20 includes a plurality of motor poles 201, for example, FIG. 1 shows four motor poles 201. Each motor pole 201 includes a plurality of rotor barriers 203 and a plurality of magnetic channels 205, and the rotor barriers 203 and the magnetic channels 205 are alternately arranged.

The present invention designs and adjusts the structure of the synchronous reluctance motor based on the ratio between the sum of the widths of the plurality of magnetic channels 205 (Σ W) and the width of the stator yoke ($W_y$), so as to have the characteristics of low development cost, wide applicability, high output torque, low torque ripple, and systematized design, as described in detail below.

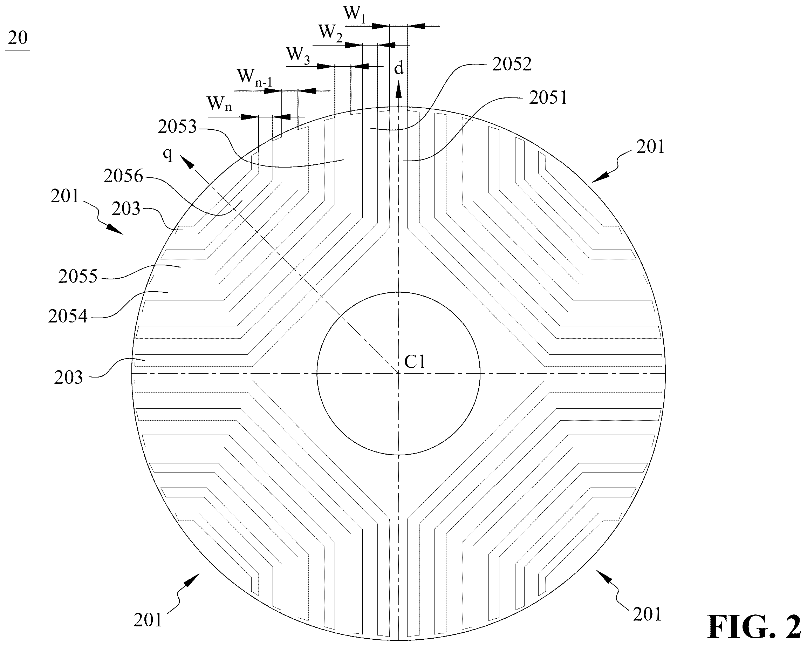

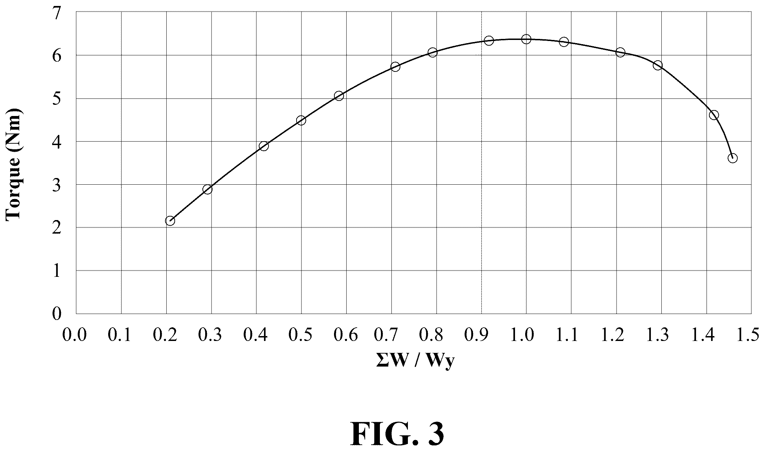

FIG. 2 is a schematic view used to illustrate the structure of the rotor in a synchronous reluctance motor according to an embodiment of the present invention; FIG. 3 is a schematic diagram used to illustrate the relationship curve between the value of the sum of the widths of the plurality of magnetic channels 205 (Σ W) divided by the width of the stator yoke ($W_y$) and the torque according to an embodiment of the present invention. Refer to FIGS. 1 to 3. In the embodiment of the present invention, the rotor includes four motor poles 201. Each motor pole 201 includes a plurality of rotor barriers 203 and a plurality of magnetic channels. The magnetic channels include a first magnetic channel to an n-th magnetic channel. The first magnetic channel includes a first magnetic channel width ($W_1$). The n-th magnetic channel includes an n-th magnetic channel width ($W_n$). n

is a positive integer greater than 1. In addition, the structure of each motor pole 201 is the same, so as long as the structure of one motor pole 201 is confirmed, the structures of four motor poles 201 can be obtained. Furthermore, although the present invention is particularly directed to a motor structure with a four-pole rotor (i.e., the number of motor poles 201 is four), the number of motor poles 201 may be adjusted to six, eight, or other numbers according to actual needs.

For example, in the structure of the rotor 20 shown in FIG. 2, a motor pole 201 will include six magnetic channels, that is, n is 6, including the first magnetic channel 2051, the second magnetic channel 2052, the third magnetic channel 2053, the fourth magnetic channel 2054, the fifth magnetic channel 2055, and the sixth magnetic channel 2056. Wherein, due to the special structure of the rotor 20, the stator line-to-line inductance of the synchronous reluctance motor will change with the rotation of the rotor 20. When the stator line-to-line inductance is the largest, the line extending from the rotor axis C1 to the outer edge of the rotor through the center of the first magnetic channel 2051 is defined as axis d, or the direct axis, and the center line which is 90 degrees ahead of the direct axis electrical angle is defined as axis q, or the quadrature axis. In FIG. 2, the magnetic channel arranged on the axis d is defined as the first magnetic channel 2051, and the magnetic channels along the axis q from the rotor axis C1 to the rotor periphery are defined as the second magnetic channel 2052, the third magnetic channel 2053... to the n-1th magnetic channel and the n-th magnetic channel, and the axis d and the axis q are both connected to the rotor axis C1.

Also, the first magnetic channel 2051 includes a first magnetic channel width ($W_1$), the second magnetic channel 2052 includes a second magnetic channel width ($W_2$), the third magnetic channel 2053 includes a third magnetic channel width ($W_3$), and so on. The fifth magnetic channel 2055 includes a fifth magnetic channel width ($W_5$ (i.e., $W_{n-1}$)), and the sixth magnetic channel 2056 includes a sixth magnetic channel width ($W_6$ (i.e., $W_n$)). Wherein, each motor pole 201 includes a (ΣW), and the formula for the

$$\left(\sum W\right) = \frac{W_1}{2} + W_2 + \cdots + W_{n-1} + W_n .$$ In other words, in a motor pole 201 of this embodiment, the (ΣW) is the sum of the values of the first magnetic channel width ($W_1$)/2 to the sixth magnetic channel width ($W_n$).

In the present invention, the relationship between the sum of the widths of the plurality of magnetic channels 205 (ΣW) and the width of the stator yoke ($W_y$) is further defined as: $0.7 \leq \dfrac{\sum W}{W_y} \leq 1.3$ . From the relationship curve between the value of the sum of the widths of the plurality of magnetic channels 205 (ΣW)/the width of the stator yoke ($W_y$) and the torque shown in FIG3, it can be seen that when the value of (ΣW)/$W_y$ is between 0.7 and 1.3, a larger output torque can be obtained.

Therefore, in the structure of the rotor 20, the present invention can simplify and adjust the relationship between the sum of the widths of the plurality of magnetic channels 205 ($\Sigma$ W) and the width of the stator yoke ($W_y$), so that the synchronous reluctance motor has a larger output torque.

Referring again to FIG. 1 and FIG. 2, in other embodiments of the present invention, the relationship between the first magnetic channel width ($W_1$) and the stator tooth width ($W_t$) can be further adjusted to meet the following condition: $0.85 \leq \dfrac{W_1}{W_t} \leq 1.15$ . Such a structure can allow the synchronous reluctance motor to further obtain low torque ripple.

In addition, in one embodiment of the present invention, the relationship between the first magnetic channel width ($W_1$) to the n-th magnetic channel width ($W_n$) is: $W_1 \geq W_2 \geq \cdots \geq W_{n-1} \geq W_n$, and the relationship between the first magnetic channel width ($W_1$) and the n-th magnetic channel width ($W_n$) is: $(W_1 - W_n) \leq 0.2 \left( \dfrac{\Sigma W}{n - 0.5} \right)$ , so that the reluctance motor can obtain a better operating effect. It should be understood that in other embodiments of the present invention, the width relationship between the first magnetic channel width (W1) and the n-th magnetic channel width ($W_n$) can be further adjusted to conform to other relationships according to actual needs, or the width relationship between the first magnetic channel width ($W_1$) and the n-th magnetic channel width ($W_n$) can be further adjusted to conform to other relationships.

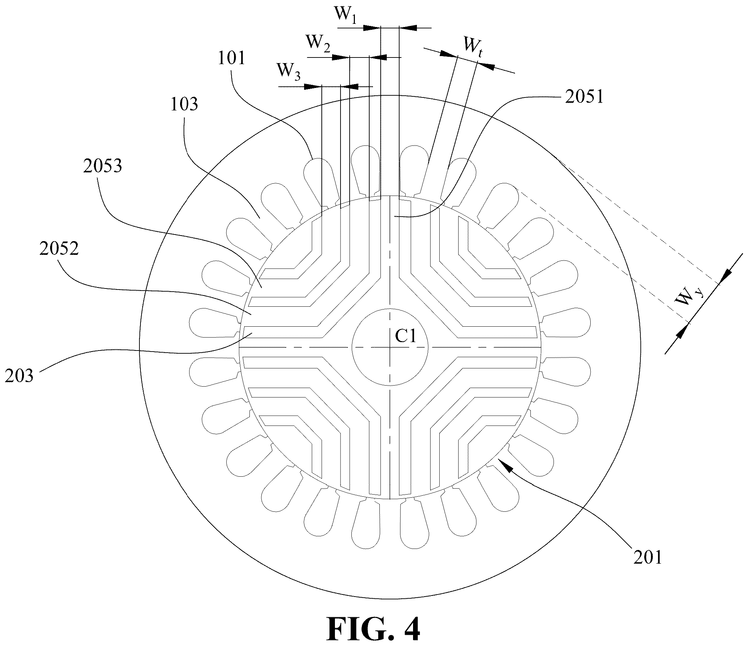

FIG. 4 is a schematic view for illustrating the structure of a synchronous reluctance motor according to another embodiment of the present invention. Referring to FIG. 4, the synchronous reluctance motor structure includes 24 stator slots 101, a stator tooth width ($W_t$) of 5.1 mm, and a stator yoke width ($W_y$) of 12 mm. The number of rotor barriers 203 is 3, and they include a first magnetic channel 2051, a second magnetic channel 2052, and a third magnetic channel 2053, and the width of the first magnetic channel ($W_1$) is 4.95 mm, the width of the second magnetic channel ($W_2$) is 4.83 mm, and the width of the third magnetic channel ($W_3$) is 4.7 mm, wherein the width of the first magnetic channel ($W_1$) is 0.97 times the width of the stator tooth (Wt), and the sum of the widths of the plurality of magnetic channels 205 ($\Sigma$ W) is equal to the width of the stator yoke ($W_y$), and $(W_1$-$W_3)\approx0.052(\Sigma W/(3-0.5))$. In this embodiment, the output torque is 6.36 Nm and the torque ripple is 14.80%.

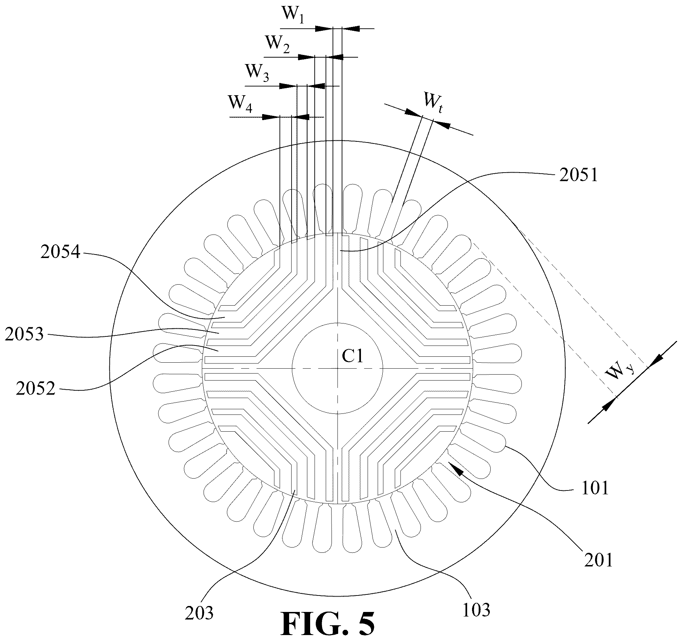

FIG. 5 is a schematic view for illustrating the structure of a synchronous reluctance motor according to yet another embodiment of the present invention. Referring to FIG. 5, the synchronous reluctance motor structure includes 36 stator slots 101, a stator tooth width ($W_t$) of 4 mm, and a stator yoke width ($W_y$) of 15 mm. The number of rotor barriers 203 is 4, and includes a first magnetic channel 2051, a second magnetic channel 2052, a third magnetic channel 2053, and a fourth magnetic channel 2054, and the width of the first magnetic channel ($W_1$) is 4 mm, the width of the second magnetic channel ($W_2$) is 3.9 mm, the width of the third magnetic channel ($W_3$) is 3.9 mm, and the width of the fourth magnetic channel ($W_4$) is 3.9 mm, wherein the width of the first magnetic channel ($W_1$) is equal to the width of the stator tooth (Wt), and the sum of the widths of the plurality of magnetic channels 205 ($\Sigma$ W) is 0.91 times the width of the stator yoke ($W_y$), and $(W_1$-$W_4)\approx0.026(\Sigma W/(4-0.5))$. In this embodiment, the output torque is 9.69 Nm and the torque ripple is 10.62%.

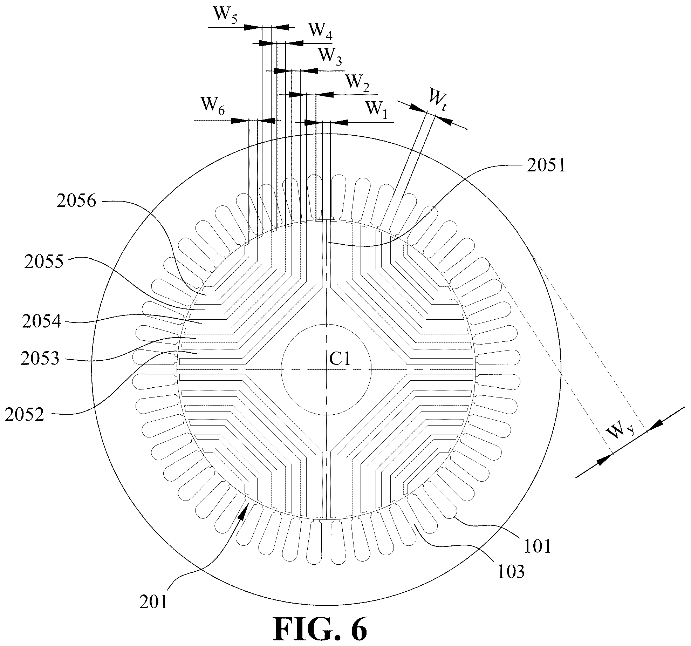

FIG. 6 is a schematic view for illustrating the structure of a synchronous reluctance motor according to yet another embodiment of the present invention. Referring to FIG. 6, the synchronous reluctance motor structure includes 48 stator slots 101, a stator tooth width ($W_t$) of 5.4 mm, and a stator yoke width ($W_y$) of 22.5 mm. The number of rotor barriers 203 is 6, and includes a first magnetic channel 2051, a second magnetic channel 2052, a third magnetic channel 2053, a fourth magnetic channel 2054, a fifth magnetic channel 2055, and a sixth magnetic channel 2056. The width of the first magnetic channel ($W_1$) is 4.9 mm, the width of the second magnetic channel ($W_2$) is 4.9 mm, and the width of the third magnetic channel ($W_3$) is 4.9 mm, the width of the fourth magnetic channel ($W_4$) is 4.9mm, the width of the fifth magnetic channel ($W_5$) is 4.9mm, and the width of the sixth magnetic channel ($W_6$) is 4.9mm, wherein the width of the first magnetic channel ($W_1$) is 0.91 times the width of the stator tooth ($W_t$), and the sum of the widths of the plurality of magnetic channels 205 ($\Sigma W$) is 1.2 times the width of the stator yoke ($W_y$), and $(W_1$-$W_6)=0$. In this embodiment, the output torque is 82.03 Nm and the torque ripple is 5.75%.

It can be seen from the above embodiments that the present invention is applicable to a stator slot 101 structure with 24 slots, 36 slots or 48 slots, and through the structure specially defined by the present invention, the power density and output torque of the motor can be improved while achieving the technical effect of reducing torque ripple.

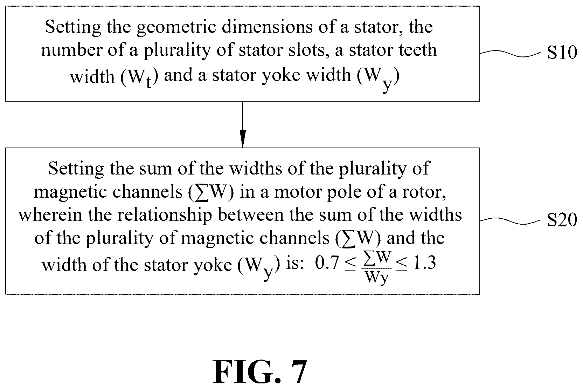

FIG. 7 is a flowchart for illustrating a design method of a synchronous reluctance motor according to an embodiment of the present invention. Referring to FIGS. 1-3 and 7, the design method of the synchronous reluctance motor of the present invention includes steps S10 and S20. Step S10 is: setting the geometric dimensions of the stator 10, the number of the plurality of stator slots 101, a stator tooth width ($W_t$) and a stator yoke width ($W_y$). The stator 10 includes a stator edge 105, each stator slot 101 includes a stator slot bottom end 1011, and the stator yoke width ($W_y$) is the shortest distance between a stator slot bottom end center edge tangent L1 of the stator slot bottom end 1011 and a stator edge tangent L2 of the stator edge 105. Step S20 is: setting a ($\Sigma W$) in a motor pole 201 of a rotor 20, wherein the relationship between the sum of the widths of the plurality of magnetic channels 205 (ΣW) and the stator yoke width ($W_y$) is:

$$0.7 \leq \frac{\Sigma W}{W_y} \leq 1.3$$ . In addition, the geometric dimensions of the stator 10 include geometric dimension values such as the radius and slot shape of the stator 10, and the number of motor poles 201 is four. Furthermore, although the present invention is particularly directed to a motor structure with a four-pole rotor (i.e., the number of motor poles 201 is four), the number of motor poles 201 may be adjusted to six, eight, or other numbers according to actual needs.

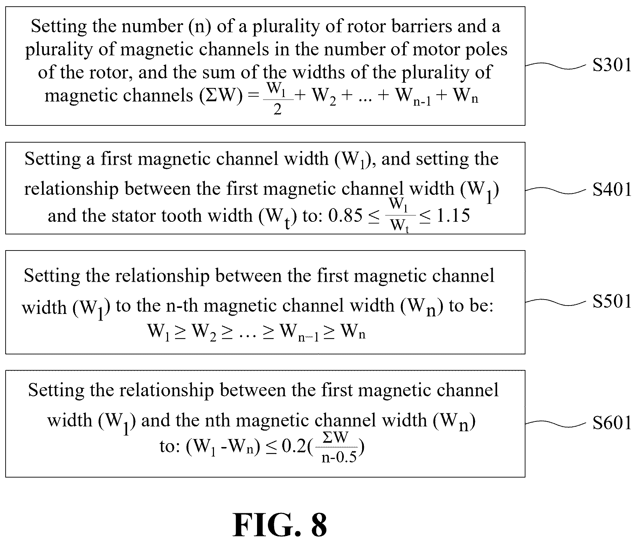

FIG. 8 is a flowchart for illustrating a design method of a synchronous reluctance motor according to another embodiment of the present invention. Referring to FIGS. 1-3 and 8, in other embodiments of the present invention, the design method of the synchronous reluctance motor may further include step S301 and/or step S401 and/or step S501 and/or step S601, wherein step S301 is: setting the number (n) of the plurality of rotor barriers 203 and the plurality of magnetic channels 205 in the motor pole 201 of the rotor 20, wherein in a motor pole 201, the magnetic channel 205 includes a first magnetic channel 2051 to an n-th magnetic channel, the first magnetic channel 2051 includes a first magnetic channel width ($W_1$), the n-th rotor magnetic channel includes an n-th magnetic channel width ($W_n$), n is a positive integer greater than 1, and the sum of the widths of the plurality of magnetic channels

$$(\Sigma W) = \frac{W_1}{2} + W_2 + \cdots + W_{n-1} + W_n.$$

Moreover, step S401 is: setting a first magnetic channel width ($W_1$), and setting the relationship between the first magnetic channel width ($W_1$) and the stator tooth width ($W_t$) to: $$0.85 \leq \frac{W_1}{W_t} \leq 1.15$$ , step S501 is: setting the relationship between the first magnetic channel width ($W_1$) to the n-th magnetic channel width ($W_n$) to be: $W_1 \geq W_2 \geq \cdots \geq W_{n-1} \geq W_n$, and step S601 is: setting the relationship between the first magnetic channel width ($W_1$) and the n-th magnetic channel width ($W_n$) to:

$$(W_1 - W_n) \leq 0.2 \left( \frac{\Sigma W}{n - 0.5} \right).$$

From the design method of the synchronous reluctance motor of the present invention described above, it can be seen that the present invention provides a systematic design method, which only requires systematic adjustment of some key parameters to design a synchronous reluctance motor with high output torque and low torque ripple, thereby streamlining the currently very complex design process by systematization.

In summary, the present invention provides a synchronous reluctance motor and a design method thereof. The present invention provides the following effects and advantages: 1. The synchronous reluctance motor of the present invention has very high applicability, and the reluctance motor structure suitable for different applications can be designed by only adjusting the structural relationship parameters of the rotor and the stator. Wherein, the design of a specific pole configuration (such as four poles) combined with the use of an inverter can effectively reduce the development time and investment cost of high-efficiency motors. 2. The output characteristics of high efficiency and high power density can effectively reduce the use of raw materials and use electrical energy more efficiently. 3. The output characteristics of high output torque and low torque ripple can be used in high value-added applications (such as machine tools, automation equipment and electric vehicles, etc.), thereby improving the product value of motor manufacturers. 4. The present invention provides a systematic design process and proposes a design method for a synchronous reluctance motor with high efficiency, high power density and low torque ripple.

Although the present invention has been described with reference to the preferred embodiments thereof, it is apparent to those skilled in the art that a variety of modifications and changes may be made without departing from the scope of the present invention which is intended to be defined by the appended claims.

## Claims

1. A synchronous reluctance motor, comprising:

   a stator, comprising a plurality of stator slots, a plurality of stator teeth, and a stator edge, each of the stator slots comprising a stator slot bottom end, a stator yoke width (Wy) being included between a stator slot bottom end center edge tangent line and a stator edge tangent line; and
   a rotor, comprising a plurality of motor poles, each of the motor poles comprising a plurality of rotor barriers and a plurality of magnetic channels, the magnetic channels comprising a first magnetic channel to an n-th magnetic channel, and the rotor barriers and the magnetic channels being arranged in an alternating manner;
   wherein, the first magnetic channel includes a first magnetic channel width ($W_1$), the n-th magnetic channel includes an n-th magnetic channel width ($W_n$), n is a positive integer greater than 1;
   wherein each of the motor poles includes a sum of the widths of the plurality of magnetic channels (ΣW), and the formula of the ΣW is ΣW =

   $$\frac{W_1}{2} + W_2 + \cdots + W_{n-1} + W_n ,$$

   wherein the relationship between the sum of the widths of the plurality of magnetic channels (ΣW) and the stator yoke width (Wy) is:

   $$0.7 \leq \frac{\Sigma W}{W_y} \leq 1.3$$ .

**2.** The synchronous reluctance motor according to claim 1, wherein each of the stator teeth includes a stator tooth width (Wt), and the relationship between the first magnetic channel width ($W_1$) and the stator tooth width ($W_t$) is: $0.85 \leq \dfrac{W_1}{W_t} \leq 1.15$ .

**3.** The synchronous reluctance motor according to claim 1, wherein the relationship between the first magnetic channel width ($W_1$) to the n-th magnetic channel width ($W_n$) is: $W_1 \geq W_2 \geq \cdots \geq W_{n-1} \geq W_n$.

**4.** The synchronous reluctance motor according to claim 1, wherein the relationship between the first magnetic channel width ($W_1$) and the n-th magnetic channel width ($W_n$) is: $(W_1 - W_n) \leq 0.2 \left( \dfrac{\Sigma W}{n-0.5} \right)$ .

**5.** The synchronous reluctance motor according to claim 1, wherein the number of the stator slots is one of 24 slots, 36 slots, and 48 slots.

**6.** A design method for a synchronous reluctance motor, comprising the following steps:

setting the geometric dimensions of a stator, the number of a plurality of stator slots, a stator teeth width ($W_t$) and a stator yoke width ($W_y$), wherein the stator comprises a stator edge, each of the stator slots comprises a stator slot bottom end, and a stator yoke width (Wy) being included between a stator slot bottom end center edge tangent line and a stator edge tangent line; and setting the sum of the widths of the plurality of magnetic channels ($\Sigma W$) in a motor pole of a rotor, wherein the relationship between the sum of the widths of the plurality of magnetic channels ($\Sigma W$) and the width of the stator yoke ($W_y$)

is: $0.7 \leq \dfrac{\Sigma W}{W_y} \leq 1.3$ .

**7.** The design method for a synchronous reluctance motor according to claim 6, further comprises the following step: setting the number of a plurality of rotor barriers and a plurality of magnetic channels in the number of motor poles of the rotor, wherein the magnetic channels include a first magnetic channel to an n-th magnetic channel, the first magnetic channel includes a first magnetic channel width ($W_1$), the n-th rotor magnetic channel includes an n-th magnetic channel width ($W_n$), n is a positive integer greater than 1, and the sum of widths the plurality of the magnetic channels

$(\Sigma W) = \dfrac{W_1}{2} + W_2 + \cdots + W_{n-1} + W_n$.

**8.** The design method for a synchronous reluctance motor according to claim 7, further comprises the following step: setting the first magnetic channel width ($W_1$), wherein the relationship between the first magnetic channel width ($W_1$) and the stator tooth width ($W_t$) is: $0.85 \leq \dfrac{W_1}{W_t} \leq 1.15$ .

**9.** The design method for a synchronous reluctance motor according to claim 7, further comprises the following step: setting the relationship between the first magnetic channel width ($W_1$) to the n-th magnetic channel width ($W_n$) to be: $W_1 \geq W_2 \geq \cdots \geq W_{n-1} \geq W_n$.

**10.** The design method for a synchronous reluctance motor according to claim 7, further comprises the following step: setting the relationship between the first magnetic channel width ($W_1$) and the n-th magnetic channel width ($W_n$) to:

$(W_1 - W_n) \leq 0.2 \left( \dfrac{\Sigma W}{n-0.5} \right)$ .

FIG. 1
(PRIOR ART)

EP 4 718 684 A1

FIG. 2

**FIG. 3**

EP 4 718 684 A1

**FIG. 4**

FIG. 5

**FIG. 6**

```
┌─────────────────────────────────────────────────┐
│  Setting the geometric dimensions of a stator, the │
│  number of a plurality of stator slots, a stator   │       S10
│  teeth width ($W_t$) and a stator yoke width ($W_y$) │
└─────────────────────────────────────────────────┘
                         │
                         ▼
┌─────────────────────────────────────────────────┐
│  Setting the sum of the widths of the plurality of │
│  magnetic channels ($\sum W$) in a motor pole of a │
│  rotor, wherein the relationship between the sum   │       S20
│  of the widths of the plurality of magnetic        │
│  channels ($\sum W$) and the width of the stator   │
│  yoke ($W_y$) is: $0.7 \leq \dfrac{\sum W}{Wy} \leq 1.3$ │
└─────────────────────────────────────────────────┘
```

**FIG. 7**

Setting the number (n) of a plurality of rotor barriers and a plurality of magnetic channels in the number of motor poles of the rotor, and the sum of the widths of the plurality of magnetic channels $(\Sigma W) = \dfrac{W_1}{2} + W_2 + \ldots + W_{n-1} + W_n$ — S301

Setting a first magnetic channel width $(W_1)$, and setting the relationship between the first magnetic channel width $(W_1)$ and the stator tooth width $(W_t)$ to: $0.85 \leq \dfrac{W_1}{W_t} \leq 1.15$ — S401

Setting the relationship between the first magnetic channel width $(W_1)$ to the n-th magnetic channel width $(W_n)$ to be: $W_1 \geq W_2 \geq \ldots \geq W_{n-1} \geq W_n$ — S501

Setting the relationship between the first magnetic channel width $(W_1)$ and the nth magnetic channel width $(W_n)$ to: $(W_1 - W_n) \leq 0.2(\dfrac{\Sigma W}{n-0.5})$ — S601

**FIG. 8**

| | Europäisches Patentamt European Patent Office Office européen des brevets | **EUROPEAN SEARCH REPORT** | **Application Number** EP 25 18 6081 |
| --- | --- | --- | --- |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| X | WANG K ET AL: "Optimal slot/pole and flux-barrier layer number combinations for synchronous reluctance machines", ECOLOGICAL VEHICLES AND RENEWABLE ENERGIES (EVER), 2013 8TH INTERNATIONAL CONFERENCE AND EXHIBITION ON, IEEE, 27 March 2013 (2013-03-27), pages 1-8, XP032415658, DOI: 10.1109/EVER.2013.6521583 ISBN: 978-1-4673-5269-7 | 1,2,4-8, 10 | INV. H02K1/24 H02K19/10  ADD. H02K1/16 |
| A | * figures 2, 3, 4, 14, 15; tables 2, 3 * ----- | 3,9 | |
| A | DMITRIEVSKII VLADIMIR ET AL: "Optimum Design of IE5 Energy-Efficiency Class Synchronous Reluctance Motor", 2019 20TH INTERNATIONAL SYMPOSIUM ON POWER ELECTRONICS (EE), IEEE, 23 October 2019 (2019-10-23), pages 1-6, XP033644583, DOI: 10.1109/PEE.2019.8923440 [retrieved on 2019-12-04] * figure 1a * ----- | 3,9 | |
| A | US 2024/305180 A1 (HSU YU-WEI [TW] ET AL) 12 September 2024 (2024-09-12) * figure 1 * ----- | 2,8 | TECHNICAL FIELDS SEARCHED (IPC)  H02K |
| A | US 2017/366075 A1 (TONG MINGYU [JP] ET AL) 21 December 2017 (2017-12-21) * figure 2 * ----- | 1-10 | |
| | -/-- | | |

The present search report has been drawn up for all claims

| Place of search | Date of completion of the search | Examiner |
| --- | --- | --- |
| The Hague | 12 November 2025 | Fernandez, Victor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 25 18 6081

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GALLICCHIO GIANVITO ET AL: "Design Methodologies of High Speed Synchronous Reluctance Machines", 2022 INTERNATIONAL CONFERENCE ON ELECTRICAL MACHINES (ICEM), IEEE, 5 September 2022 (2022-09-05), pages 448-454, XP034206525, DOI: 10.1109/ICEM51905.2022.9910624 [retrieved on 2022-10-13] * figure 1 * ----- | 1-10 | |

TECHNICAL FIELDS
SEARCHED (IPC)

The present search report has been drawn up for all claims

| Place of search | Date of completion of the search | Examiner |
|---|---|---|
| The Hague | 12 November 2025 | Fernandez, Victor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 25 18 6081

12-11-2025

| Patent document cited in search report | Publication date | Patent family member(s) | | Publication date |
|---|---|---|---|---|
| US 2024305180 A1 | 12-09-2024 | CN | 118631005 A | 10-09-2024 |
| | | US | 2024305180 A1 | 12-09-2024 |
| US 2017366075 A1 | 21-12-2017 | CN | 107528394 A | 29-12-2017 |
| | | EP | 3261219 A1 | 27-12-2017 |
| | | JP | 2017229120 A | 28-12-2017 |
| | | US | 2017366075 A1 | 21-12-2017 |

EPO FORM P0459

**EP 4 718 684 A1**

**Patent documents cited in the description**

- TW 113136764